# EUROPÄISCHE PATENTANMELDUNG

(11) **EP 4 159 350 A1**
(43) Veröffentlichungstag der Anmeldung: **05.04.2023**
(21) Anmeldenummer: 22199321.5
(22) Anmeldetag: 02.10.2022
(51) Int. Cl.: B23D 47/02, B27B 5/29

(54) **KAPP- UND ZUGSÄGE**

(30) Priorität: 04.10.2021 DE 102021125710
(71) Anmelder: Metabowerke GmbH, 72622 Nürtingen (DE)
(72) Erfinder: Hörmann, Stephan, 72639 Neuffen (DE)
(74) Vertreter: Markfort, Iris-Anne Lucie

(57) **Zusammenfassung**

Die Erfindung betrifft eine Kapp- und Zugsäge (10) mit einem Untertisch (12) zur Aufnahme und Abstützung eines zu bearbeitenden Werkstücks (W), wobei der Untertisch (12) wenigstens eine Stützverlängerung (20) mit einem Auflageabschnitt (26) umfasst, der zur Aufnahme und Abstützung des zu bearbeitenden Werkstücks (W) dient, wobei die Stützverlängerung (20) zwischen einer eingeschobenen Stellung und einer ausgezogenen Stellung relativ zu dem Untertisch (12) hin- und herbewegbar ist und hierzu wenigstens einen Verbindungssteg (22) aufweist, der zur Verbindung der Stützverlängerung (20) mit dem Untertisch (12) zumindest abschnittsweise in eine korrespondierende Ausnehmung (50) an dem Untertisch (12) einschiebbar und zur Lösung der Verbindung vollständig aus dieser herausziehbar ist. Erfindungsgemäß weist die Stützverlängerung (20) weiterhin eine Sicherungsvorrichtung zur Sicherung der Stützverlängerung gegen eine unbeabsichtigte Auszugsbewegung des Verbindungsstegs aus der korrespondierenden Ausnehmung an dem Untertisch (12) auf, wobei die Sicherungsvorrichtung ein bewegbares Sicherungselement umfasst, das in Richtung einer Sicherungsstellung elastisch vorgespannt ist, wobei das Sicherungselement in der Sicherungsstellung eine Sicherungskante im Bereich der Ausnehmung an dem Untertisch hintergreift und dadurch eine unerwünschte Auszugsbewegung des Verbindungsstegs verhindert.

## Beschreibung

Die Erfindung betrifft eine Kapp- und Zugsäge mit einem Untertisch zur Aufnahme und Abstützung eines zu bearbeitenden Werkstücks sowie wenigstens eine mit dem Untertisch verbindbare Tischverbreiterung

Selbstverständlich betrifft die vorliegende Erfindung jedoch auch Kappsägen ohne Zugverstellung, sowie Sägen mit weiteren Zusatzfunktionen, wie der Möglichkeit des Tischsägebetriebs und Tischkreissägens, oder Sägen ohne Kappfunktion.

Derartige Sägen weisen in der Regel ferner einen Sägekopf auf, welcher ein Sägeblatt, einen Obertisch und eine Schutzhaube umfasst, wobei im Kappbetrieb der Sägekopf zwischen einer von dem Untertisch angehobenen Stellung und einer in Richtung auf den Untertisch abgesenkten Stellung verschwenkbar ist.

Um eine möglichst sichere Handhabung der Säge während der Werkstückbearbeitung zu gewährleisten und nach Möglichkeit optimale Bearbeitungsergebnisse zu erzielen, ist es erforderlich, dass das zu bearbeitende Werkstück sicher und stabil auf der Werkstückauflagefläche, das heißt einer Oberseite des Untertischs, abgestützt ist. Um dies zu gewährleisten sind aus dem Stand der Technik mehrere Lösungen bekannt.

So offenbart beispielsweise die deutsche Gebrauchsmusterschrift der Anmelderin DE 20 2008 011 654 U1 eine Kapp- und Zugsäge, deren Untertisch bzw. Trägerkörper mit einem verlängerten Auslegearm vorgesehen ist. Der verlängerte Auslegearm ist vergleichsweise kurz, um den Transport der Säge nicht unnötig zu erschweren bzw. den von der Säge eingenommenen Raum nicht unnötig zu vergrößern.

Eine weitere Lösung ist aus der deutschen Offenlegungsschrift DE 10 2010 062 255 A1 bekannt, die eine Kappsäge offenbart, bei der an den Untertisch bzw. Trägerkörper Abstützblöcke angesetzt werden können, wobei die Verbindung von Abstützblock und Untertisch über ein Formschlusselement ermöglicht wird, das in eine korrespondierendes Formschlusselement an dem Trägerkörper eingesetzt wird.

Nachteilig bei dieser Lösung ist jedoch gegebenenfalls, dass die ansetzbaren Abstützblöcke vergleichsweise viel Platz in Anspruch nehmen und insbesondere bei einem Transport der Kappsäge unhandlich sind. Weiterhin kann es passieren, dass die separat ausgebildeten Abstützblöcke beim Transport der Säge vergessen werden und dann, wenn sie benötigt werden, nicht zur Hand sind.

Demgegenüber wurde von der Anmelderin eine Lösung entwickelt, bei der eine Tischverbreiterung bzw. Stützverlängerung mit einem Auflageabschnitt, der zur Aufnahme und Abstützung des zu bearbeitenden Werkstücks dient, relativ zu dem Untertisch in diesen eingeschoben oder aus diesem herausgezogen werden kann. Die in dem Patent DE 10 2013 224 128 B3 geschützte Stützverlängerung weist hierzu wenigstens einen Verbindungssteg auf, der zur Verbindung der Stützverlängerung mit dem Untertisch zumindest abschnittsweise in eine korrespondierende Ausnehmung an dem Untertisch einschiebbar und zur Lösung der Verbindung vollständig aus dieser herausziehbar ist. Somit kann die Stützverbindung insbesondere für den Transport der Kapp- und Zugsäge durch Einschieben ihres Verbindungsstegs besonders kompakt an dem Untertisch aufgenommen sein, während sie in Abhängigkeit von der Länge des zu bearbeitenden Werkstücks für dessen Bearbeitung aus dem Untertisch herausziehbar gestaltet ist. Je nach Anwendungsfall kann es sinnvoll sein, dass die Stützverlängerung stufenlos zwischen der eingeschobenen und der ausgezogenen Stellung relativ zu dem Untertisch verschiebbar ist oder dass beispielsweise mit Hilfe von Raststufen oder dergleichen eine stufenweise Verstellung vorgesehen ist. Die freien Enden der Verbindungsstege können in die korrespondierenden Ausnehmungen an dem Untertisch eingeschoben, wobei an den freien Enden geringfügige Verdickungen der Verbindungsstege vorgesehen sein können, die beispielsweise einen aus Gummi oder dergleichen hergestellten Ring aufweisen, um einen definierten Widerstand gegen ein unbeabsichtigtes Herauslösen des Verbindungsstegs aus der korrespondierenden Ausnehmung zu verhindern. Diese mögliche Lösung unterliegt jedoch in der Praxis einer Alterung und Abnutzung des elastischen Materials, so dass keine zuverlässige Sicherung gegen ein unbeabsichtigtes Herauslösen gewährleistet werden kann. Stattdessen dient das verdickte Ende eher einer haptischen Rückmeldung an den Anwender, dass er im Begriff ist, die Stützverlängerung herauszuziehen.

Aus der EP 2246137 B1 ist weiterhin eine Arbeitsflächenerweiterung bei einer Gehrungssäge bekannt, bei der ein Anschlagelement vorgesehen ist, das verhindert, dass die Stützverlängerung vom dem Untertisch gelöst werden kann. Bei dieser Lösung ist ein Lösen der Stützverlängerung somit nicht möglich oder gewollt. Gerade mit einer Lösung, wie sie in dem Patent der Anmelderin beschrieben ist, bei der zwei Stützverlängerungen mit einander verbunden werden können, um ein Stützelement unabhängig vom Untertisch zu bilden, ist ein vollständiges Lösen von dem Untertisch vorteilhaft.

Bei der in der Praxis umgesetzten Lösung der Anmelderin kann jede der Stützverlängerungen mittels einer zusätzlichen Schraube gegen ein unerwünschtes Lösen von dem Untertisch gesichert werden, wobei die Schraube vergleichsweise aufwändig unter Zuhilfenahme eines Schraubendrehers und in einer gekippten Stellung des Untertischs gelöst werden muss, ehe die Stützverlängerungen gelöst werden können. Diese Lösung stellt somit eine zuverlässige Sicherung der Stützverlängerungen gegen ein unerwünschtes Lösen vom Untertisch bzw. Verlieren dar. Zugleich kann sie aber zuweilen vom Anwender als umständlich empfunden werden.

Demgegenüber soll eine alternative und einfacher zu lösende Sicherung bereit gestellt werden, die es dem Anwender ermöglicht, einerseits eine sichere Verbindung von Stützverlängerung und Untertisch herzustellen und andererseits die Stützverlängerung einfach und schnell von dem Untertisch zu lösen, beispielweise, um die Stützverlängerungen anderweitig zu nutzen.

Die Aufgabe wird vorliegend durch eine Kapp- und Zugsäge mit den Merkmalen des Anspruchs 1 gelöst. Die Unteransprüche umfassen weitere Ausgestaltungen der Kapp- und Tischkreissäge.

Erfindungsgemäß umfasst der Untertisch wenigstens eine, bevorzugt zwei oder mehr Stützverlängerungen mit einem Auflageabschnitt, der zur Aufnahme und Abstützung des zu bearbeitenden Werkstücks dient. Jede Stützverlängerung ist zwischen einer eingeschobenen Stellung und einer ausgezogenen Stellung relativ zu dem Untertisch hin und her bewegbar und weist hierzu wenigstens einen Verbindungssteg auf, der zur Verbindung der Stützverlängerung mit dem Untertisch zumindest abschnittsweise in eine korrespondierende Ausnehmung an dem Untertisch einschiebbar und zur Lösung der Verbindung vollständig aus dieser herausziehbar ist. Somit kann die Stützverbindung insbesondere für den Transport der Kapp- und Zugsäge durch Einschieben ihres Verbindungsstegs besonders kompakt an dem Untertisch aufgenommen sein, während sie in Abhängigkeit von der Länge des zu bearbeitenden Werkstücks für dessen Bearbeitung aus dem Untertisch herausziehbar gestaltet ist. Je nach Anwendungsfall kann es sinnvoll sein, dass die Stützverlängerung stufenlos zwischen der eingeschobenen und der ausgezogenen Stellung relativ zu dem Untertisch verschiebbar ist oder dass beispielsweise mit Hilfe von Raststufen oder dergleichen eine stufenweise Verstellung vorgesehen ist.

Zur Sicherung der Stützverlängerung an dem Untertisch, d.h. um ein unerwünschtes Lösen der Stützverlängerung vom dem Untertisch zu verhindern, ist weiterhin erfindungsgemäß eine Sicherung vorgesehen, wobei die Sicherungsvorrichtung ein bewegbares Sicherungselement umfasst, das in Richtung einer Sicherungsstellung elastisch vorgespannt ist, wobei das Sicherungselement in der Sicherungsstellung eine Sicherungskante im Bereich der Ausnehmung an dem Untertisch hintergreift und dadurch eine unerwünschte Auszugsbewegung des Verbindungsstegs verhindert.

Hierdurch wird somit eine formschlüssige Sicherung der Stützverlängerung an dem Untertisch bereitgestellt, die einfach herzustellen ist. Durch die elastische Vorspannung bleibt das Sicherungselement in der Sicherungsstellung, bis dieses manuell oder mit Hilfe eines wie auch immer gearteten Betätigungsmittels gegen die elastische Vorspannung in eine Lösestellung überführt wird. In der Lösestellung entfällt der Hintergriff, so dass der Verbindungssteg einfach aus der Ausnehmung an dem Untertisch herausgezogen werden kann.

Es kann ferner vorgesehen sein, dass das Sicherungselement eine Anlagefläche aufweist, die in der Sicherungsstellung an einer korrespondierenden Anlagefläche der Sicherungskante anliegt und eine weitere Auszugsbewegung verhindert. Dabei kann die Anlagefläche in ihrer Orientierung insbesondere derart relativ zu der Bewegungsrichtung des Sicherungselements ausgerichtet sein, dass die auf die Anlageflächen einwirkenden Normalkräfte nahezu parallel mit der Auszugsrichtung des Verbindungsstegs sind und keine Bewegung des Sicherungselements aus der Sicherungsstellung heraus bewirken.

Weiterhin kann vorgesehen sein, dass das Sicherungselement eine schwenkbare Rastklinke umfasst, die mittels eines Federelements in eine ausgelenkte Sicherungsstellung vorgespannt ist, in der die Rastklinke von dem Verbindungssteg bezogen auf eine Längsachse des Verbindungsstegs radial vorragt. Die Rastklinke ist drehbar bzw. schwenkbar an dem Verbindungssteg gelagert, wobei der Lagerpunkt auf der Mittellängsachse des Verbindungsstegs oder benachbart hierzu angeordnet sein kann. Weiterhin kann der Lagerpunkt im Bereich eines freien Endes der Rastklinke angeordnet sein, wobei das zweite freie Ende die Anlagefläche zur Herstellung des formschlüssigen Hintergriffs in der Sicherungsstellung aufweist. Das zweite freie Ende schwenkt infolge der elastischen Vorspannung der zugehörigen Feder um den Lagerpunkt und ragt so in seiner Sicherungsstellung über den Außenumfang des Verbindungsstegs vor. Auf diese Weise wird eine zuverlässige Sicherung bereitgestellt.

Es kann ferner vorgesehen sein, dass das Sicherungselement einen Bewegungsbegrenzer aufweist, der eine Bewegung des Sicherungselements zwischen einer definierten Lösestellung und der Sicherungsstellung begrenzt.

Insbesondere kann der Bewegungsbegrenzer eine Ausnehmung sowie einen darin bewegbaren Vorsprung aufweisen, wobei die Ausnehmung an dem Verbindungssteg oder dem Sicherungselement ausgebildet ist, und wobei der darin bewegbare Vorsprung an dem jeweils anderen Bauteil ausgebildet ist, so dass durch den in der Ausnehmung aufgenommen und bewegbaren Vorsprung die Bewegung des Sicherungselements begrenzt wird. Alternativ kann eine ausreichende Bewegungsbegrenzung bereits durch die Orientierung der Anlageflächen zu der Bewegungsrichtung des Sicherungselements und/oder die Wahl des elastischen Federelements und/oder die Ausgestaltung eines weiteren Hebelarms an dem Sicherungselement erfolgen.

Es kann ferner vorgesehen sein, dass an dem Untertisch eine Betätigungsausnehmung vorgesehen ist, durch die ein stiftförmiges Betätigungselement eingeführt werden kann, derart, dass das stiftförmige Betätigungselement das Sicherungselement gegen die elastische Vorspannung in die Lösestellung überführt, um den Verbindungssteg von dem Untertisch zu lösen.

Insbesondere kann das Sicherungselement einen Betätigungsabschnitt aufweisen und die Betätigungsausnehmung an dem Untertisch kann mit dem Betätigungsabschnitt fluchten, wenn das Sicherungselement mit seiner Anlagefläche an der korrespondierenden Anlagefläche der Sicherungskante anliegt.

In einer solchen definierten relativen Positionierung von Untertisch und Verbindungssteg kann das stiftförmige Betätigungselement zuverlässig gegen die elastische Vorspannung das Sicherungselement in seine Lösestellung überführen, in der das Sicherungselement außer Eingriff mit der Sicherungskante des Untertischs gelangt und der Verbindungssteg aus der Ausnehmung an dem Untertisch herausgezogen werden kann.

Der Betätigungsabschnitt an dem Sicherungselement kann im Falle einer schwenkbaren Rastklinke in einem Bereich zwischen der Anlagefläche und dem Lagerpunkt (erster Hebelarm) angeordnet sein. Alternativ oder zusätzlich kann der Lagerpunkt jedoch auch derart an dem Sicherungselement angeordnet sein, dass das Sicherungselement einen zweiten Hebelarm aufweist, an dem der Betätigungsabschnitt oder ein weiterer Betätigungsabschnitt angeordnet sein kann. Insbesondere bei einer solchen Ausgestaltung kann auch eine Betätigung des Betätigungsabschnitts am zweiten Hebelarm, eine entsprechende Zugänglichkeit vorausgesetzt (beispielsweise wenn der Untertisch gekippt wird), manuell, d.h. ohne Zuhilfenahme eines stiftförmigen Betätigungselements bewirkt werden. Diese Ausgestaltung ist auch hilfreich, wenn zwei Stützverlängerungen miteinander verbunden werden können und wieder voneinander gelöst werden sollen.

Das stiftförmige Betätigungselement kann unverlierbar mit dem Untertisch verbunden sein, beispielsweise in Form einer Betätigungsschraube, die ein- und ausgedreht werden kann, oder in Form eines in der Betätigungsausnehmung aufgenommenen und gesicherten Stiftes, der relativ verschiebbar in der Betätigungsausnehmung aufgenommen ist und ggf. in einer Richtung entgegen der Betätigungsrichtung federnd vorgespannt ist. Diese Lösung stellt sicher, dass eine Betätigung zum Überführen des Sicherungselements in seine Lösestellung und damit zum Lösen der Verbindung von Verbindungssteg und Untertisch immer einfach möglich ist und kein weiteres Werkzeug erforderlich ist.

Alternativ kann jedoch auch nur eine Betätigungsausnehmung vorgesehen sein, in die ein stiftförmige Gegenstand, beispielsweise ein Schraubenzieher, ein Innensechskantschlüssel oder ein Stift eingeführt werden kann, um als stiftförmiges Betätigungselement zu wirken. Diese Lösung ist kostengünstiger und ermöglicht zugleich, dass in einer Werkstatt ohnehin vorhandene Gegenstände als stiftförmiges Betätigungselement, insbesondere ein mit der Maschine mitgelieferter Innensechskantschlüssel, zum Lösen der Verbindung von Verbindungssteg und Untertisch genutzt werden können. Diese Lösung ist insbesondere von Vorteil, wenn im Rahmen einer Norm gefordert ist, dass ein Lösen nur mittels eines zusätzlichen Werkzeugs möglich sein soll.

Schließlich kann, wie bereits bei der bekannten Lösung der Anmelderin aus dem Patent DE 10 2013 224 128 B3, vorgesehen sein, dass wenigstens zwei Stützverlängerungen vorgesehen sind und jede Stützverlängerung ferner wenigstens einen Stützschenkel zur stabilen Abstützung der Stützverlängerung aufweist, wobei an jedem Stützschenkel der miteinander verbindbaren Stützverlängerungen wenigstens eine korrespondierende Aufnahmeausnehmung zur Aufnahme des wenigstens einen Verbindungsstegs der jeweiligen zu verbindenden Stützverlängerung vorgesehen ist.

Der Stützschenkel ist besonders dann vorteilhaft, wenn die Stützverlängerung in einer ausgezogenen Stellung relativ zu dem Untertisch angeordnet ist. Die eingezogene Stellung der Stützverlängerung bezeichnet eine Stellung, in der der Verbindungssteg der Stützverlängerung maximal in die korrespondierende Ausnehmung an dem Untertisch eingeschoben ist. Die ausgezogene Stellung der Stützverlängerung gibt indes eine Stellung an, in der der Verbindungssteg auf eine maximal mögliche Länge aus der Ausnehmung an dem Untertisch ausgezogen ist, jedoch immer noch eine Verbindung zu dem Untertisch herstellt. Somit bezeichnet die ausgezogene Stellung der Stützverlängerung nicht eine dritte Stellung, in der die Stützverlängerung vollständig von dem Untertisch gelöst und unabhängig von diesem mit einem vollkommen frei wählbaren Abstand zu dem Untertisch aufgestellt werden kann.

Gemäß einer möglichen Weiterbildung der Erfindung kann die Stützverlängerung in einer solchen dritten, von dem Untertisch gelösten Stellung des Verbindungsstegs als separate Abstützung für das zu bearbeitende Werkstück genutzt werden. In einem von dem Untertisch gelösten Zustand sind die wenigstens zwei Stützverlängerungen erfindungsgemäß miteinander verbindbar.

Weiterhin kann der Auflageabschnitt der Stützverlängerung in einem mit dem Untertisch verbundenen Zustand im Wesentlichen bündig mit der das zu bearbeitende Werkstück abstützenden Oberfläche des Untertischs abschließen. Durch einen solchen bündigen Abschluss wird eine Verlängerung des Untertischs mithilfe der Stützverlängerung erreicht.

Der Auflageabschnitt der Stützverlängerung kann ferner in einem von dem Untertisch gelösten Zustand, in dem er als separate Abstützung für das zu bearbeitende Werkstück dient, in einer horizontalen Ebene mit der abstützenden Oberfläche des Untertischs liegen. Somit weist der Auflageabschnitt der Stützverlängerung in der dritten Stellung des Verbindungsstegs, in dem die Stützverlängerung vollkommen von dem Untertisch gelöst ist und mit einem beliebigen Abstand zu dem Untertisch angeordnet werden kann, die gleiche Höhe auf, wie die das Werkstück abstützende Oberfläche. Hierdurch können auch besonders lange Werkstücke nicht nur über den Untertisch abgestützt werden, sondern zusätzlich über die Stützverlängerung, wodurch eine besonders stabile Abstützung des zu bearbeitenden Werkstücks erreicht werden kann.

Der Auflageabschnitt kann ferner integral mit dem Stützschenkel ausgebildet sein. Alternativ kann dieser jedoch auch separat zu dem Stützschenkel ausgebildet und gegebenenfalls mit einem Abstand zu diesem an der Stützverlängerung angeordnet sein. Eine integrale Ausbildung des Auflageabschnitts an dem Stützschenkel kann durch eine verringerte Teilezahl vorteilhaft in Bezug auf die Montage und Herstellungskosten sein, während eine separate Ausbildung vorteilhaft sein kann, wenn der Auflageabschnitt relativ zu dem Stützschenkel bewegbar gestaltet sein soll.

Zur Herstellung einer Verbindung der wenigstens zwei Stützverlängerungen miteinander kann an jedem Stützschenkel der miteinander verbindbaren Stützverlängerungen wenigstens eine korrespondierende Aufnahmeausnehmung zur Aufnahme des wenigstens einen Verbindungsstegs der jeweils zu verbindenden Stützverlängerung vorgesehen sein. Somit wird auch bei der Verbindung der Stützverlängerungen miteinander diese Verbindung über die Verbindungsstege erreicht, die in einer korrespondierenden Aufnahmeausnehmung aufgenommen werden. Je nachdem, ob es sich bei der Aufnahmeausnehmung um eine Sackloch- oder Durchgangsbohrung handelt, sind unterschiedliche Verbindungskonfigurationen der Stützverlängerungen denkbar, beispielsweise auch solche, bei denen mehr als zwei Stützverlängerungen miteinander verbunden werden.

Grundsätzlich ist es denkbar, dass auch hier die Stützverlängerungen in analoger Weise wie der Untertisch eine Sicherungskante aufweisen, die entsprechend zur Sicherung der Verbindung von dem Sicherungselement hintergriffen werden kann. In diesem Fall kann an den Stützverlängerungen auch eine Betätigungsausnehmung zum Überführen des Sicherungselements in seine Lösestellung vorgesehen sein. Alternativ kann auch vorgesehen sein, dass eine rein manuelle Betätigung, beispielsweise eines Betätigungsabschnitts am zweiten Hebelarm (im Falle eines schwenkbaren Sicherungselement in Form einer Rastklinke wie vorstehend bereits beschrieben) das Sicherungselement in seine Lösestellung zurückzuführen vermag.

Weiterhin kann die Stützverlängerung wenigstens zwei Stützschenkel aufweisen, von denen wenigstens einer relativ zu dem Verbindungssteg bewegbar, insbesondere verschiebbar, ausgebildet ist. Bei dieser Ausführungsform können beispielsweise die wenigstens zwei Stützschenkel der Stützverlängerung in einem von dem Untertisch gelösten Zustand dazu genutzt werden, die Stützverlängerung stabil und sicher von einer entsprechenden Unterlage abzustützen, indem sie mit Abstand zueinander angeordnet werden. Auch in einem mit dem Untertisch verbundenen Zustand können die wenigstens zwei Stützschenkel die Stützverlängerung in ihrem ausgezogenen Zustand besonders gut stabilisieren. In der eingeschobenen Stellung der Stützverlängerung können die beiden Stützschenkel, dadurch dass wenigstens einer verschiebbar ausgebildet ist, in Anlage zueinander gebracht werden, wodurch sie sehr kompakt stehen.

Neben der genannten verschiebbaren Ausführungsform sind jedoch auch weitere Alternativen denkbar. Beispielsweise kann einer der Stützschenkel relativ zu dem Verbindungssteg schwenkbar ausgebildet sein. Gegebenenfalls weist der Verbindungssteg neben einer Schwenkachse für die Schwenkbewegung des wenigstens einen verschwenkbaren Stützschenkels auch eine Ausnehmung auf, in der der verschwenkte Stützschenkel aufgenommen werden kann, wenn dies gewünscht ist. Eine solche verschwenkbare Ausgestaltung von wenigstens einem der Stützschenkel ermöglicht eine weiterhin besonders platzsparende Anordnung der Stützverlängerung an dem Untertisch der Kapp- und Tischkreissäge, ohne die Funktionalität der Stützverlängerung zu beeinträchtigen.

Ferner kann vorgesehen sein, dass wenigstens einer der Stützschenkel einer Stützverlängerung eine flächige Bodenseite zum stabilen Abstellen auf einer ebenen Oberfläche aufweist. Mit dem Bereitstellen einer flächigen Bodenseite wird eine weiterhin erhöhte Stabilität gewährleistet.

Gemäß einer Weiterbildung kann bei zwei miteinander verbundenen Stützverlängerungen die flächige Bodenseite einer der Stützverlängerungen zur Aufnahme und Abstützung des zu bearbeitenden Werkstücks genutzt werden.

Durch die vorliegende Erfindung wird zum einen eine ausziehbare Verbreiterung des Untertischs bereitgestellt, die in eingeschobenem Zustand eine besonders kompakte Bauform der Kapp- und Zugsäge ermöglicht und im ausgezogenen Zustand eine verbesserte Abstützung des zu bearbeitenden Werkstücks bereitstellt. Indem die Stützverlängerung in den Untertisch einschiebbar ist, wird ein besonders unkomplizierter Transport der Kapp- und Zugsäge ermöglicht, wobei insbesondere die Stützverlängerungen durch Integration in den Untertisch weniger leicht vergessen werden.

Dadurch, dass sich die Stützverlängerung zudem auch noch von dem Untertisch vollständig abnehmen lässt und als separate Abstützung für das zu bearbeitende Werkstück genutzt werden kann, können insbesondere auch sehr lange Werkstücke stabil und sicher abgestützt werden, da die separate Abstützung in einem beliebigen Abstand zu dem Untertisch der Kapp- und Zugsäge angeordnet werden kann. Sie zuverlässige Sicherung der Stützverlängerung am Untertisch, solange kein vollständiges ablösen hiervon gewünscht ist, ermöglicht ein einfaches und sicheres Arbeiten. Zugleich wird durch die Ausgestaltung der Sicherung ein schnelles und unkompliziertes Lösen und Verbinden von Verbindungssteg und Untertisch erreicht.

Schließlich können bei einer Weiterbildung der Erfindung mehrere Stützverlängerungen miteinander verbunden werden und hierdurch einen zusammenhängenden stabilen Abstützungsblock bilden, der im Wesentlichen die gleiche Höhe aufweist, wie der Untertisch der Säge. Auf diese Weise kann die Stabilität der Stützverlängerung, welche als separate Abstützung für das zu bearbeitende Werkstück genutzt werden soll, weiter erhöht werden.

Ergänzend sei darauf hingewiesen, dass Begriffe, wie "umfassend", "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

### Es zeigen schematisch:

- Figur 1: eine bekannte Kapp- und Zugsäge mit Stützverlängerungen am Untertisch;
- Figur 2: eine erfindungsgemäße Kapp- und Zugsäge mit Stützverlängerungen am Untertisch in Detaildarstellung;
- Figuren 3a-c: detaillierte Ansichten des Sicherungselements im Zusammenspiel mit dem Untertisch der erfindungsgemäßen Kapp- und Zugsäge gemäß Figur 2;
- Figuren 4a-b: detaillierte Ansichten des Sicherungselements der erfindungsgemäßen Kapp- und Zugsäge gemäß Figur 2; und
- Figur 5: eine Kapp- und Zugsäge mit den Stützverlängerungen losgelöst vom Untertisch.

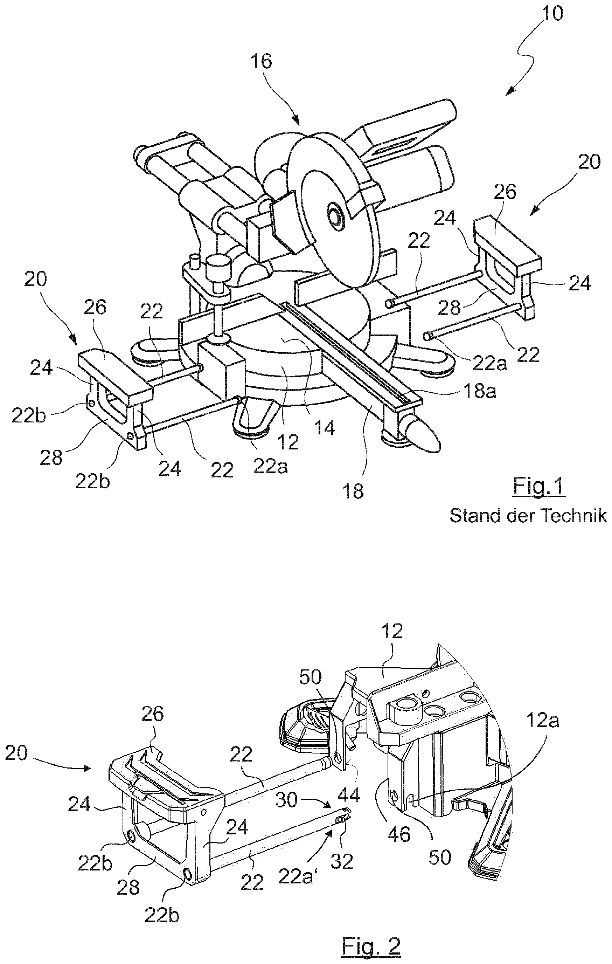

In der Figur 1 ist eine aus dem Stand der Technik bekannte Kapp- und Zugsäge gezeigt, die allgemein mit dem Bezugszeichen 10 bezeichnet ist. Diese umfasst einen Untertisch 12 mit einer ein Werkstück abstützenden Oberfläche 14 sowie ein Sägeaggregat 16, dessen Merkmale im Wesentlichen denen der in der Gebrauchsmusterschrift DE 20 2008 011 654 U1 gezeigten Kapp- und Zugsäge entsprechen. Der Untertisch 12 ist ferner mit einem verlängerten Auslegearm 18 versehen, in dessen Oberseite ein Eintauschschlitz 18a eingebracht ist, in den mit dem Absenken der Säge 10 auch deren Sägeblatt eintauchen kann.

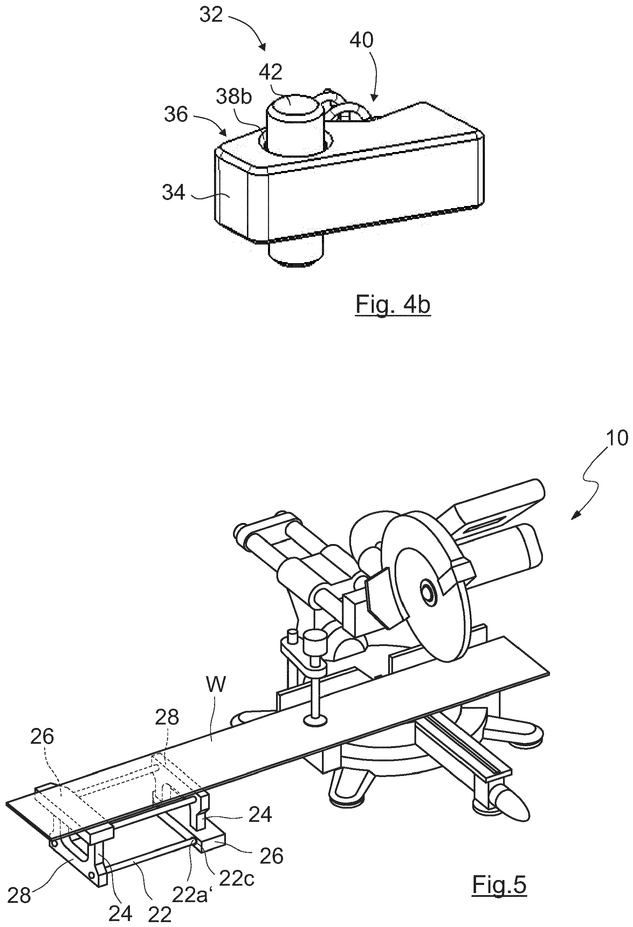

Für eine verbesserte Abstützung eines zu bearbeitenden Werkstücks W (vgl. auch Figur 5) auf dem Untertisch 12 sind ferner in der Figur 1 zwei Stützverlängerungen 20 vorgesehen, die über ihre Verbindungsstege 22 mit dem Untertisch 12 verbunden werden können. Hierzu werden die freien Enden 22a der Verbindungsstege 22 in korrespondierende Ausnehmungen (nicht dargestellt) an dem Untertisch 12 eingeschoben. Wie man in der Figur 1 deutlich erkennen kann, sind im Stand der Technik an den freien Enden 22a geringfügige Verdickungen der Verbindungsstege 22 vorgesehen, die beispielsweise einen aus Gummi oder dergleichen hergestellten Ring aufweisen, um einen definierten Widerstand gegen ein unbeabsichtigtes Herauslösen des Verbindungsstegs 22 aus der korrespondierenden Ausnehmung zu verhindern.

Nichtsdestotrotz lassen sich die Stützverbindungen 20 grundsätzlich, sobald dieser Widerstand überwunden ist, vollständig von dem Untertisch 12 lösen und als separate Abstützung für ein zu bearbeitendes Werkstück nutzen (vgl. auch Figur 5).

In der vorliegend gezeigten Darstellung umfasst jede der Stützverlängerungen 20 zwei Verbindungsstege 22. Selbstverständlich reicht bei einer entsprechenden Ausbildung der Stützverbindung auch ein einziger Verbindungssteg aus, der zudem nicht, wie dargestellt, als Rundstab ausgebildet sein muss, sondern auch beispielsweise als Flachteil ausgebildet sein kann. Weiterhin können die Verbindungsstege aus unterschiedlichen Materialien hergestellt sein. Beispielsweise sind Aluminium und Aluminiumlegierungen aufgrund des damit verbundenen geringen Gewichts ebenso denkbar wie andere metallische oder Plastik-Werkstoffe.

Die vorliegenden Verbindungsstege 22 ermöglichen mit Ausnahme von dem vollständigen Lösen ein stufenloses Verstellen der Stützverbindung 20 relativ zu dem Untertisch 12. Alternativ kann es jedoch auch sinnvoll sein, mehrere Stufen vorzusehen, die gegebenenfalls mit Hilfe einer Skala einen bestimmten Abstand zum Untertisch 12 angeben können.

Mit ihrem jeweils anderen Ende 22b sind die Verbindungsstege 22 mit Stützschenkeln 24 der Stützverlängerung 20 verbunden. Dabei ist jedem Verbindungssteg 22 ein Stückschenkel 24 zugeordnet. Alternative Ausgestaltungen, bei denen beispielsweise ein einziger Stützschenkel vorgesehen ist, der einen oder mehrere Verbindungsstege aufnimmt, sind ebenfalls denkbar. Als Material für die Stützschenkel können beispielsweise leicht zu verarbeitende Plastikwerkstoffe aufgrund ihrer geringen Herstellungskosten ebenso in Frage kommen, wie andere in der Herstellung von Werkzeugmaschinen bekannten Werkstoffe.

Zur Abstützung eines zu bearbeitenden Werkstücks W (vgl. auch Figur 5) ist ein Auflageabschnitt 26 an der Stützverbindung 20 vorgesehen, der im Betrieb der Stützverbindung 20 im Wesentlichen in einer horizontalen Ebene mit der abstützenden Oberfläche 14 des Untertischs 12 liegt. Auf diese Weise schließt der Auflageabschnitt 26 in einer eingeschobenen Stellung der Stützverbindung 20 (in der er seitlich an dem Untertisch 12 anliegt) im Wesentlichen bündig mit der abstützenden Oberfläche 14 ab. In einer ausgezogenen Stellung oder in einem Zustand, in dem die Stützverbindung 20 als separate Abstützung für das zu bearbeitende Werkstück genutzt werden kann (vgl. Figur 5), weist der Auflageabschnitt 26 ebenfalls im Wesentlichen die gleiche Höhe auf, wie die abstützende Oberfläche 14 des Untertischs 12. Hierdurch wird eine stabile und sichere Abstützung auch längerer Werkstück, wie beispielsweise in Figur 5 dargestellt, gewährleistet.

In der gezeigten Ausführungsform ist der Auflageabschnitt integral mit den beiden Stützschenkeln 24 der jeweiligen Stützverlängerung 20 ausgebildet. Alternativ ist es jedoch ebenso denkbar diesen separat hiervon auszugestalten, insbesondere wenn diese relativ zu den Stützschenkeln 24 bewegbar sein soll (z.B. verschwenkbar, um eine horizontale Ausrichtung zu ermöglichen, selbst wenn die Stützverlängerung in einer vom Untertisch gelösten Stellung gekippt steht).

Bei einer Gestaltungsvariante, wie sie beispielsweise in der Figur 5 gezeigt ist, können mehrere Stützverbindungen, in Figur 5 sind es zwei, auch miteinander verbunden werden, um gemeinsam einen stabilen Abstützblock zu bilden. Hierzu weist jede des Stützverbindungen im Übergangsbereich von dem Stützschenkel zum Auflageabschnitt 26 Aufnahmeöffnungen auf, in die die freien Enden 22a Verbindungsstege 22 einer anderen Stützverbindung gleicher Weise aufgenommen werden können, wie an dem Untertisch 12. Im montierten Zustand liegt folglich einer der Auflageabschnitte 26 der verbundenen Stützverbindungen 20 auf dem Boden bzw. einer Unterlage auf und dient wie die flächige Bodenseite 28 einer Stützverbindung 20 zum stabilen Abstellen auf dem Boden bzw. einer ebenen Oberfläche oder Unterlage. Umgekehrt dient auch eine flächige Bodenseite 28 einer der Stützverbindungen 20 als Auflageabschnitt für das zu bearbeitende Werkstück W.

Die Besonderheit der vorliegenden Erfindung ist insbesondere in den Figuren 2, 3a bis 3c und 4a und 4b gezeigt und wird nachfolgend erläutert.

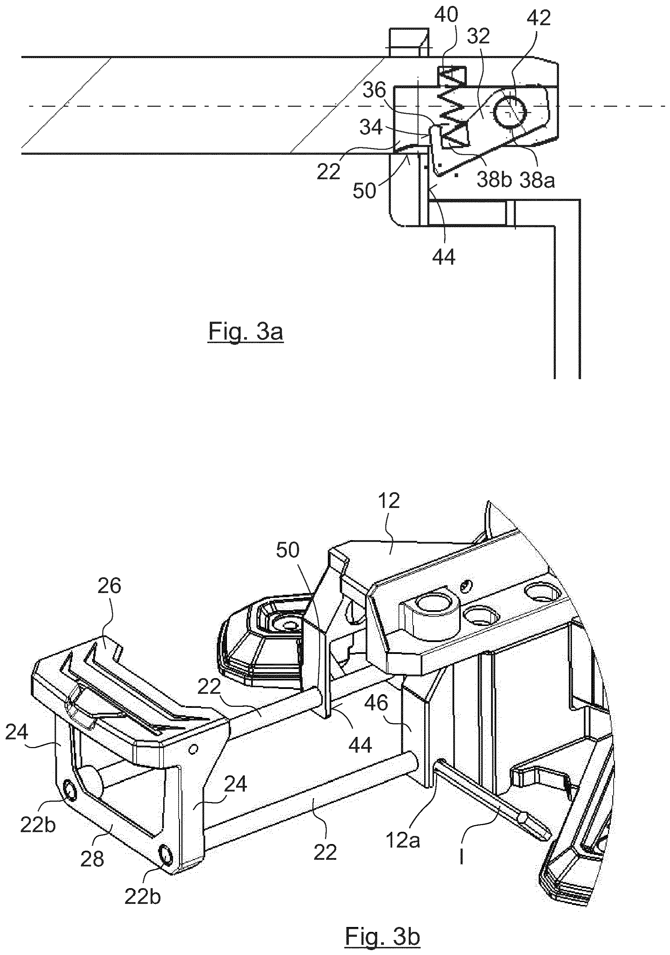

Diese zeigen eine Sicherungsvorrichtung im Detail, die dazu dient, die Stützverbindung 20 gegen ein unbeabsichtigte Lösen von dem Untertisch zu sichern. Während im Stand der Technik an den freien Enden 22a geringfügige Verdickungen der Verbindungsstege 22 vorgesehen sind, die beispielsweise einen aus Gummi oder dergleichen hergestellten Ring aufweisen, um einen definierten Widerstand gegen ein unbeabsichtigtes Herauslösen des Verbindungsstegs 22 aus der korrespondierenden Ausnehmung zu verhindern, wird erfindungsgemäß eine Sicherungsvorrichtung 30 vorgesehen, die an dem freien Ende 22a' des erfindungsgemäßen Verbindungsstegs 22 vorgesehen ist. Diese umfasst in der gezeigten Ausführungsform ein als Rastklinke ausgebildetes Sicherungselement 32 mit einer Anlagefläche 34, die an einer korrespondierenden Anlagefläche 44 einer Sicherungskante 46 des Untertischs 14 zur Anlage kommen kann, und über einen Hintergriff, wie in Figur 3a gezeigt eine formschlüssige Verbindung mit diesem ermöglicht.

Das Sicherungselement 32 ist in der dargestellten Ausführungsform mittels einer Schraubenfeder 40 in Richtung seiner Sicherungsstellung elastisch vorgespannt, wobei alternativ oder zusätzlich auch andere elastische Federelemente eingesetzt werden können, wie beispielsweise eine Drehfeder.

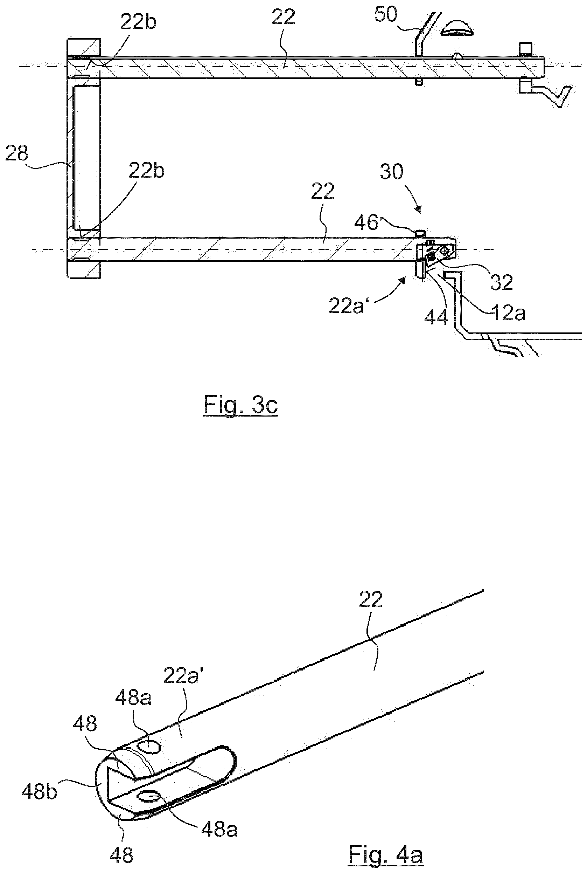

Das freie Ende 22a' des Verbindungsstegs 22 kann mit einem durchgängigen Schlitz oder, wie gezeigt mit einer Nut (nicht bezeichnet) versehen, der die beiden Endbacken 48 (vgl. auch Figur 4a) ausbildet, die in der gezeigten Ausführungsform über den Steg 48b miteinander verbunden sind. Die gezeigte Feder 40 stützt sich mit ihrem ersten Ende an dem Steg 48b ab und mit ihrem zweiten Ende an dem Sicherungselement 32, das hierzu eine Aufnahmeöffnung 38b aufweist.

Das Sicherungselement 32 ist ferner mittels eines Lagerbolzens 42 an dem freien Ende 22a' drehbar gelagert, wobei ein erstes freies Ende 40 an einem ersten Hebelarm ausgebildet ist und ein zweites freies Ende die Anlagefläche 34 trägt und an einem zweiten Hebelarm ausgebildet ist. Der Lagerbolzen 42 ist hierzu in einer Aufnahmeöffnung 38a an dem Sicherungselement 32 aufgenommen und mit seinen freien Enden wiederum beidseitig in Aufnahmeöffnungen 48a des freien Endes 22a' des Verbindungsstegs 22 drehbar gelagert. Auf diese Weise bildet der Lagerbolzen 42 die Drehachse für die Schenkbewegung des Sicherungselements 32.

Wie in der Figur 2 zu erkennen ist, wird das freie Ende 22a' des Verbindungsstegs 22 mit dem Sicherungselement 32 in seiner Sicherungsstellung in die Aufnahmeöffnung 50 eingeführt. Dabei wird das Sicherungselement 32 gegen die elastische Vorspannung eingeschwenkt und ermöglicht so auf einfache Weise das Herstellen einer sicheren Verbindung. Sobald die Ausnehmung durchdrungen ist, bildet die rückwärtige Innenwandung die Anlagefläche 44 an der Sicherungskante 46 aus.

Soll diese Verbindung gelöst werden, muss das Sicherungselement 32 wiederum aus der Sicherungsstellung in eine Lösestellung überführt werden. Hierzu kann, wie in den Figuren 3b und 3c gezeigt, ein stiftförmiges Betätigungselement, beispielsweise ein Innensechskantschlüssel I, in einer Betätigungsöffnung 12a am Untertisch 12 eingeführt werden, die mit dem Betätigungsabschnitt 36 des Sicherungselements 32 fluchtet, wenn die Stützverlängerung 22 sich in der maximal ausgezogenen Stellung befindet, in der die Anlageflächen 34 und 44 aneinander formschlüssig anliegen. Wird das Sicherungselement nun entgegen der elastischen Vorspannung zu dem Verbindungssteg 22 hin (in Figur 3a nach links) gedrückt bzw. eingeschwenkt, kann der Verbindungssteg 22 aus der Aufnahmeöffnung 50 herausgezogen werden.

In Abhängigkeit von der räumlichen Orientierung des Sicherungselements und seiner durch den Lagerbolzen 42 gebildeten Schwenkachse ist auch eine entsprechende Anordnung der Betätigungsöffnung 12a am Untertisch vorgesehen. Beispielsweise kann das Sicherungselement alternativ um eine horizontale Schwenkachse verschwenkt werden und die Betätigungsöffnung 12a an der Oberseite des Untertischs 12 vorgesehen sein, so dass mit einem Innensechskantschlüssel I von oben auf das Sicherungselement gedrückt werden kann, um dieses in eine Lösestellung zu überführen. Weitere alternative Ausführungsformen umfassen eine Drehfeder als elastisches Element, die mit einem ersten Ende in einer Aufnahmeöffnung am Sicherungselement 32 aufgenommen sein kann und mit einem zweiten Ende in einer Aufnahmeöffnung an dem freien Ende 22a' der beiden Endbacken 48. Dabei können die Endbacken 48 insbesondere ohne Verbindungssteg 48b vorgesehen sein, d.h. durch einen Schlitz voneinander getrennt sein.

Der gleiche Mechanismus kann genutzt werden, um zwei Stützverlängerungen 22 miteinander zu verbinden, wie in der Figur 5 gezeigt. Auch hier kann das freie Ende 22a' einen erfindungsgemäßen Sicherungsmechanismus 30 aufweisen.

Durch die erfindungsgemäße Lösung wird eine einfache und sichere Verbindung der Stützverlängerung an einem Maschinenuntertisch und zugleich eine unkompliziertes Lösen derselben von dem Untertisch ermöglicht.

## Patentansprüche

1. Kapp- und Zugsäge (10) mit einem Untertisch (12) zur Aufnahme und Abstützung eines zu bearbeitenden Werkstücks (W), wobei der Untertisch (12) wenigstens eine Stützverlängerung (20) mit einem Auflageabschnitt (26) umfasst, der zur Aufnahme und Abstützung des zu bearbeitenden Werkstücks (W) dient, wobei die Stützverlängerung (20) zwischen einer eingeschobenen Stellung und einer ausgezogenen Stellung relativ zu dem Untertisch (12) hin- und herbewegbar ist und hierzu wenigstens einen Verbindungssteg (22) aufweist, der zur Verbindung der Stützverlängerung (20) mit dem Untertisch (12) zumindest abschnittsweise in eine korrespondierende Ausnehmung (50) an dem Untertisch (12) einschiebbar und zur Lösung der Verbindung vollständig aus dieser herausziehbar ist,
**dadurch gekennzeichnet, dass** die Stützverlängerung (20) weiterhin eine Sicherungsvorrichtung zur Sicherung der Stützverlängerung gegen eine unbeabsichtigte Auszugsbewegung des Verbindungsstegs aus der korrespondierenden Ausnehmung an dem Untertisch (12) aufweist,
wobei die Sicherungsvorrichtung ein bewegbares Sicherungselement umfasst, das in Richtung einer Sicherungsstellung elastisch vorgespannt ist, wobei das Sicherungselement in der Sicherungsstellung eine Sicherungskante im Bereich der Ausnehmung an dem Untertisch hintergreift und dadurch eine unerwünschte Auszugsbewegung des Verbindungsstegs verhindert.

2. Kapp- und Zugsäge (10) nach Anspruch 1, **dadurch gekennzeichnet, dass** das Sicherungselement eine Anlagefläche aufweist, die in der Sicherungsstellung an einer korrespondierenden Anlagefläche der Sicherungskante anliegt und eine weitere Auszugsbewegung verhindert.

3. Kapp- und Zugsäge (10) nach Anspruch 1 oder 2, **dadurch gekennzeichnet, dass** das Sicherungselement eine schwenkbare Rastklinke umfasst, die mittels eines Federelements in eine ausgelenkte Sicherungsstellung vorgespannt ist, in der die Rastklinke von dem Verbindungssteg bezogen auf eine Längsachse des Verbindungsstegs radial vorragt.

4. Kapp- und Zugsäge (10) nach einem der Ansprüche 1 bis 3, **dadurch gekennzeichnet, dass** das Sicherungselement einen Bewegungsbegrenzer aufweist, der eine Bewegung des Sicherungselements zwischen einer definierten Lösestellung und der Sicherungsstellung begrenzt.

5. Kapp- und Zugsäge (10) nach Anspruch 4, **dadurch gekennzeichnet, dass** der Bewegungsbegrenzer eine Ausnehmung sowie einen darin bewegbaren Vorsprung aufweist, wobei die Ausnehmung an dem Verbindungssteg oder dem Sicherungselement ausgebildet ist, und wobei der darin bewegbare Vorsprung an dem jeweils anderen Bauteil ausgebildet ist, so dass durch den in der Ausnehmung aufgenommen und bewegbaren Vorsprung die Bewegung des Sicherungselements begrenzt wird.

6. Kapp- und Zugsäge (10) nach einem der vorhergehenden Ansprüche, **dadurch gekennzeichnet, dass** an dem Untertisch eine Betätigungsausnehmung vorgesehen ist, durch die ein stiftförmiges Betätigungselement eingeführt werden kann, derart, dass das stiftförmige Betätigungselement das Sicherungselement gegen die elastische Vorspannung in die Lösestellung überführt, um den Verbindungssteg von dem Untertisch zu lösen.

7. Kapp- und Zugsäge (10) nach Anspruch 6, **dadurch gekennzeichnet, dass** das Sicherungselement einen Betätigungsabschnitt aufweist und dass die Betätigungsausnehmung an dem Untertisch mit dem Betätigungsabschnitt fluchtet, wenn das Sicherungselement mit seiner Anlagefläche an der korrespondierenden Anlagefläche der Sicherungskante anliegt.

8. Kapp- und Zugsäge (10) nach einem der vorhergehenden Ansprüche, **dadurch gekennzeichnet, dass** wenigstens zwei Stützverlängerungen (24) vorgesehen sind und jede Stützverlängerung (20) ferner wenigstens einen Stützschenkel (24) zur stabilen Abstützung der Stützverlängerung (20) aufweist, wobei an jedem Stützschenkel (24) der miteinander verbindbaren Stützverlängerungen (20) wenigstens eine korrespondierende Aufnahmeausnehmung zur Aufnahme des wenigstens einen Verbindungsstegs (22) der jeweiligen zu verbindenden Stützverlängerung (20) vorgesehen ist.
